# EUROPEAN PATENT APPLICATION

(11) **EP 0 659 461 A1**
(43) Date of publication of application: **28.06.1995**
(21) Application number: 94309822.8
(22) Date of filing: 23.12.1994
(51) Int. Cl.: B01D 47/06, B05B 1/30

(54) **Gas scrubber**

(30) Priority: 24.12.1993 GB 9326430; 30.01.1994 GB 9401749
(71) Applicant: COLT INTERNATIONAL LICENSING LIMITED, Hampshire PO9 2LY (GB); COLT INTERNATIONAL HOLDINGS A.G., CH-6340 Walterswil/Baar (CH)
(72) Inventor: Langford, Paul Wayne, Southampton, Hampshire (GB); Oliver, Patrick Alan, Portsmouth, Hampshire (GB); Tarling, John Anthony, Southampton, Hampshire (GB)
(74) Representative: Greenwood, John David

(57) **Abstract**

A gas scrubber is disclosed comprising a gas duct (6) and a static sprayer (8) therein, the static sprayer being adapted to develop a sheet of washing fluid across the duct. The sheet may be substantially planar, and the sprayer may comprise a nozzle (100) having an outlet (110) equipped with a deflector (120) (e.g. a conical, frusto-conical, cusped or trumpet-shaped deflector). The deflector (120) is arranged to be moveable relative to the outlet (110) during use of the gas scrubber so it can be cleared of solid occlusions without halting the gas scrubbing process. The gas scrubber is useful in methods of scrubbing gas for use in air pollution control and air-conditioning systems.

## Description

This invention relates to wet scrubbers for use in removing contaminants from gases, and in particular for removing particulates from air in air pollution control systems.

For both commercial and environmental reasons the removal of impurities from gases is an important problem. In particular, it is now extremely important to reduce the level of impurities in gaseous emmissions prior to release into the atmosphere, and the health benefits of purifying air for use in air conditioning systems are well established.

These problems have been addressed via the use of wet scrubbing systems, in which finely divided droplets of a washing liquid are sprayed into a stream of gas. In these systems, impurities in the gas are absorbed by the droplets of washing liquid and thereby removed from the gaseous phase. Such systems conventionally use nozzles to disperse the washing liquid.

It is desirable, in the interests of economy, to recirculate the washing fluid but this could only be done in prior art systems by employing efficient filters in the fluid recirculation system to prevent blockages in the nozzles by material removed from the cleaned gasses. Any such filters would have to be cleaned regularly to maintain a ready circulation of the washing fluid.

A gas scrubber according to the present invention comprises a gas duct and a static sprayer therein arranged to spray recirculated washing fluid across the duct, the sprayer comprising a nozzle having an outlet for the washing liquid at which is provided a deflector, the deflector being arranged to be moveable relative to the outlet during use of the gas scrubber for cleaning the sprayer of solid occlusions.

The present invention allows the sprayer to be cleared of any accumulated occlusion without stopping the scrubbing process. Because the sprayer nozzle itself can be cleaned, the requirement for a comprehensive filter system in the recirculation path is obviated although clearly some such filtering may also be carried out with the present invention if desired and convenient.

Rotating nozzles have moving parts that are prone to rapid wear and consequential increases in maintenance costs. Moreover, the need for drive means to rotate such nozzles adds to the capital and running costs of the scrubbing system. Preferably, then, the gas scrubber includes a static sprayer therein, the static sprayer being preferably adapted to develop a sheet of washing fluid across the duct. Other spray patterns may, however, be used, for example jets at predetermined angles.

Preferably, the sheet of washing fluid is substantially planar, though hollow conical or dome-shaped sheets may also be used.

The sheet of washing fluid is generated by a nozzle having an outlet for the washing liquid at which is provided a deflector. The shape of the deflector is chosen according to the desired shape of the liquid sheet, and may for example be conical, frusto-conical, cusped or trumpet-shaped. A particularly preferred embodiment of the invention employs a generally trumpet-shaped deflector in which the outer perimeter has an annular groove bounded by a lip immediately adjacent the outer periphery thereof. This deflector has been found to produce a particularly even and substantially planar sheet of cleaning liquid, the grooved lip facilitating the detachment of cleaning liquid from the outer perimeter of the deflector.

The deflector may be moveably attached at the nozzle in any convenient manner. Preferably, the deflector is mounted on a stem, the longitudinal axis of which is coaxial with that of the nozzle outlet coupled to means for adjusting the stem and therefore the distance between the reflector and outlet during use of the gas scrubber.

The apparatus may comprise a plurality of static sprayers, which may be arranged in one plane (or adjacent a common plane) or disposed in one or more washing chambers, and is advantageously of modular construction. The washing chambers may be arranged in series or in parallel: arrangement in series results in higher efficiency, while arrangement in parallel permits higher gas throughputs. The precise number and configuration of the static sprayers is selected according to the application.

The apparatus may further comprise other elements conventionally used in wet scrubbers, for example mist eliminators, cyclones (for removing coarse particulates), retention chambers and fans for drawing and/or blowing air through the apparatus.

The washing fluid used in the apparatus according to the invention is preferably fed to the nozzle (e.g. by pumping under pressure) and recirculated via a tank. The tank is preferably a sedimentation tank having a sloping bottom, to collect particulate matter from the washing fluid. In most applications, the washing fluid is pumped to the nozzle under pressure, for example under a pressure of 2 to 5 bar (e.g. about 3 bar).

The apparatus according to the invention may find utility in many different applications, for example in air conditioning systems, air pollution control systems and for removing chemical solvents from gaseous chemical effluents. The washing fluid in many cases is water, although other chemicals or compositions may be used according to the application. For instance, the apparatus may be used to remove acids from acid laden gas, and in such applications an alkaline washing liquid is employed.

The invention also comprehends a method for scrubbing gas using a gas scrubber of the present invention comprising intermittently moving the deflector relative to the outlet driving use of the gas scrubber to clear the sprayer of any accumulated solid occlusions.

The invention further comprehends a static sprayer for use with the gas scrubber of the present invention comprising a nozzle having an outlet and a deflector, and adjustment means for adjusting the distance between the outlet and the deflector couplable to the recirculating washing fluid and powerable hydraulically thereby.

The adjustment means may comprise a double-acting piston/cylinder actuator. The adjustment means may include a sprayer in which the valve is motor driven.

The valve may be motor driven but any convenient drive means may be employed.

The invention will now be described in greater detail (and by way of example only) with reference to the particular embodiments shown in the accompanying drawings, in which:
Fig. 1 is a diagrammatic view of apparatus according to the invention,
Fig. 2 is a transverse section through a static sprayer according to the invention, as located in the gas duct,
Fig. 3 is a transverse section of a static sprayer according to the invention, showing the deflector arrangement in greater detail,
Figs. 4a and 4b are transverse sections through a particularly preferred deflector of the invention, showing a grooved lip arrangement at the outer periphery, and
Fig. 5 shows a transverse section of a further static sprayer according to the invention.

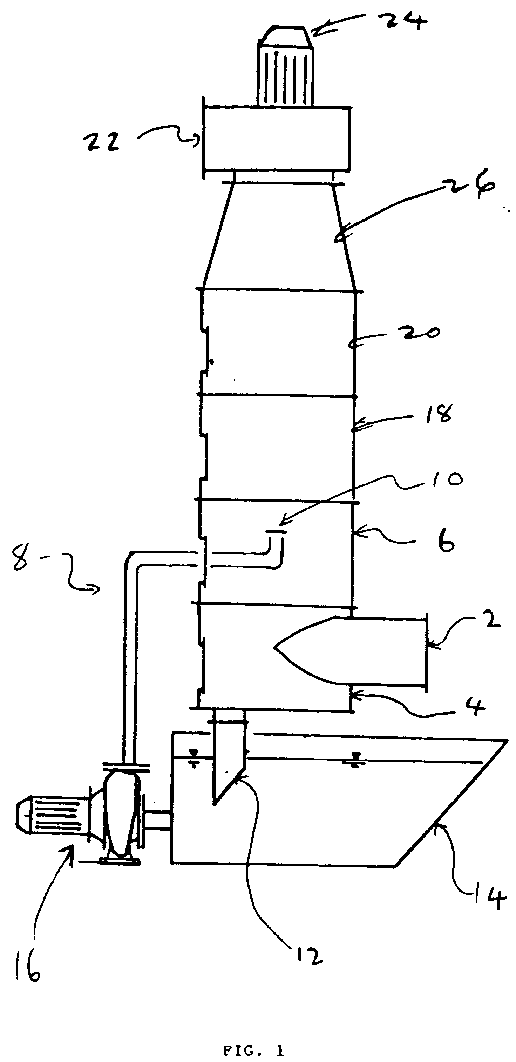

The apparatus of the invention shown in Fig. 1 has a gas inlet 2 at which the gas to be scrubbed is introduced into the system. The gas may be introduced at a pressure slightly below atmospheric pressure.

The apparatus shown in Fig. 1 is of modular construction, the gas first entering a cyclone 4 in which large particles are removed from the gas. The gas is then introduced into the scrubbing chamber 6, where it passes through a sheet of cleaning liquid produced by the static sprayer 8 at the nozzle 10. The scrubbing chamber 6 defines a gas duct of up to 3 m in diameter. The cleaning liquid is recirculated via the water return duct 12 and the holding tank 14 by a pump unit 16. The pump unit 16 preferably supports a flow rate of about 15 m³ per hour, at a pressure of about 2 to 5 bar (e.g. about 3 bar).

After being scrubbed in the scrubbing chamber 6 the gas passes into a retention chamber 18. The retention chamber 18 is optional. In applications where relatively high purifications are required, this module of the system can be replaced with one or more supplementary scrubbing chambers, so that the apparatus comprises several scrubbing chambers arranged in series.

On passing through the retention chamber, the gas is introduced into a mist eliminating module 20. This may be selected from a variety of commercially available units well known to those skilled in the art. Several mist eliminating modules may be provided.

The scrubbed and purified gas is then finally drawn out of the system through the outlet 22 by the fan 24 and fan inlet cone 26. At this stage the gas is normally at or around atmospheric pressure.

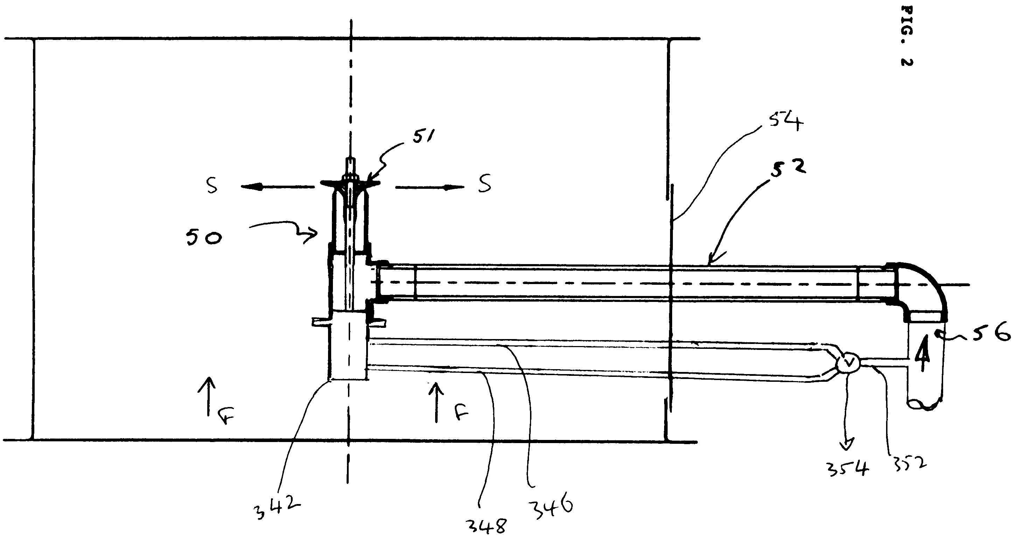

An exemplary static sprayer of the invention and its relationship to the gas duct is shown in greater detail in Fig. 2. It comprises a nozzle 50 and deflector 51 attached to a washing liquid feed pipe 52 which brings washing liquid from the pump at 56. The feed pipe 52 passes through the wall of the scrubbing chamber, in this embodiment via an access hatch 54. The access hatch 54 provides access to the nozzle for maintenance. The sprayer 50 produces, in this embodiment, a sheet of cleaning liquid in a direction shown by the arrows S, in an orientation substantially transverse to the direction of gas flow through the system (shown by the arrows F).

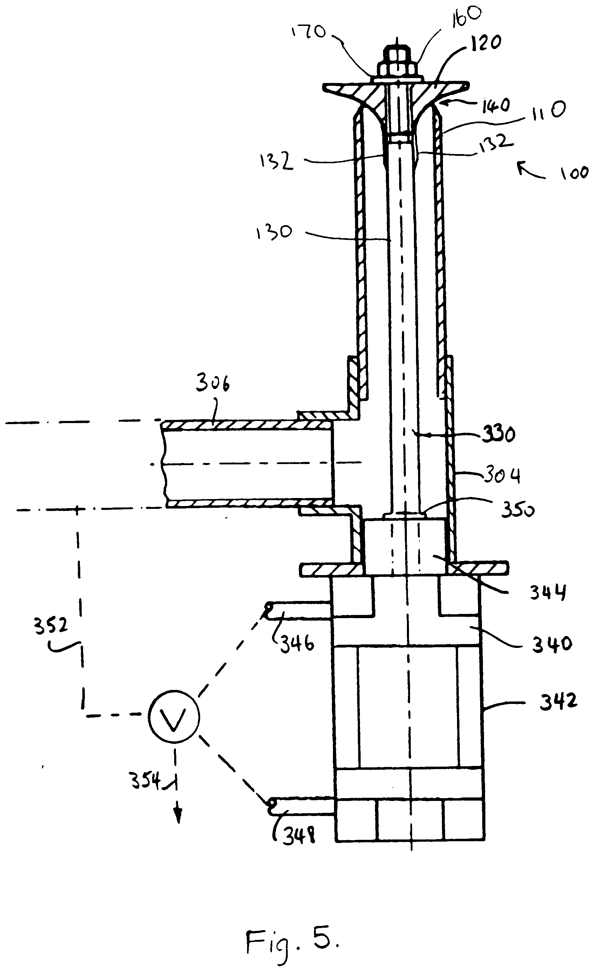

An actuator 342 for moving the deflector will be described in detail later with reference also to Figure 5.

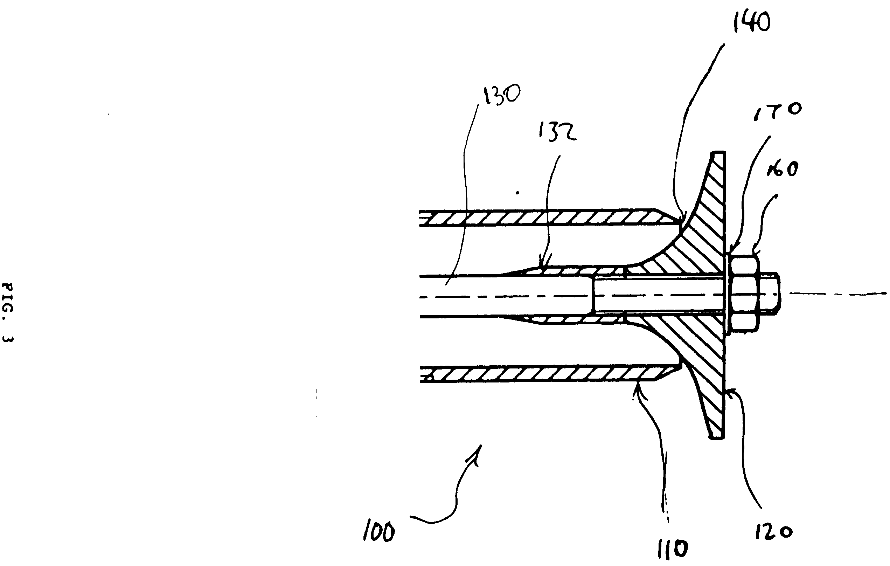

The static sprayer assembly of Figure 2 is shown in detail in Fig. 3. It comprises a nozzle assembly 100 including an outlet 110 and deflector 120. The outlet 110 may be bevelled at its open end. The deflector 120 is preferably of stainless steel, though any other suitable material may be employed (e.g. polymers or ferrous or non-ferrous metals). The deflector 120 is threadedly mounted on a stem 130 which is coaxial with the outlet 110 and which holds the deflector 120 at the outlet 110 at a fixed distance during normal spraying, the distance (defining the clearance gap 140) being set by rotating the deflector on its threaded mounting. Once suitably adjusted, the deflector may be locked into place by tightening locking nut 160 with washer 170. The clearance gap 140 is preferably set to 1 to 3 mm, usually about 2 mm. The clearance gap 140 can be adjusted to produce a thin or thick sheet of liquid. A push-fit sleeve 132 may be provided, as shown, to minimize turbulence at the deflector/stem junction.

The clearance gap 140 can be increased by moving the stem 130, as will be described later, to allow cleaning of the sprayer.

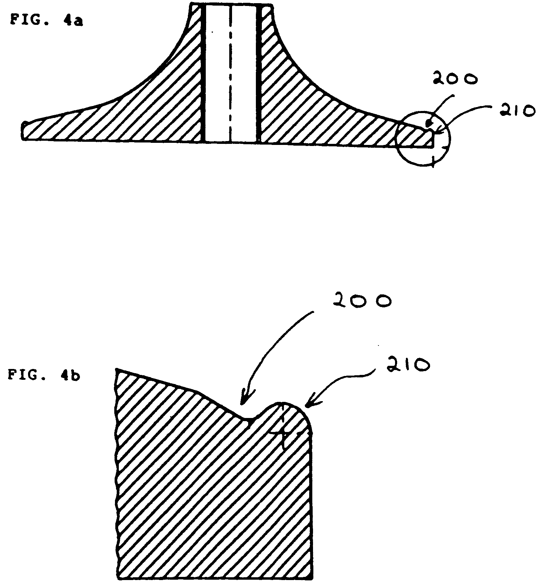

A particularly preferred deflector geometry is shown in Fig. 4a. The deflector 120 is generally trumpet-shaped, having an annular groove 200 bounded by a lip 210 immediately adjacent the outer periphery thereof. The groove and lip arrangement are shown in magnified form in Fig. 4b.

The foregoing description discloses a gas scrubber which features a static sprayer adapted to develop a sheet of washing fluid across a duct, through which gas to be scrubbed is passed. The specific sprayer is shown in Figs. 2 to 4 and the washing fluid may be fed from a tank to the sprayer and recirculated. Other forms of sprayer may be employed, however, for example jets rather than sheets of fluid.

Such a sprayer could become at least partly blocked by solid matter. The function of the sprayer would then be impaired and ultimately it may fail to produce the desired sheet of fluid. Such solid matter could originate from particles washed from the gas, that have collected in the tank of a recirculating washing fluid system. Alternatively, the solid matter might be present in e.g. relatively impure industrial water which might be fed to the scrubber as washing fluid without recirculation.

If a prior art static sprayer becomes blocked, it is necessary to take the gas scrubber out of service while its static sprayer is dismantled, cleaned, reassembled and reset.

The improved gas scrubber and static sprayer of the present invention aims to overcome the aforesaid disadvantage and inconvenience and operates as will now be described with particular reference to Figure 5.

The improved static sprayer is shown by way of example in Fig. 5. In the drawing, 100 is the nozzle assembly comprising the static sprayer of Figure 4. The assembly 100 comprises the nozzle pipe with an inlet fitting 304 at one end, to which washing fluid feed duct 306 is attached, and the deflector 120 at its opposite end. The deflector 120 is located closely spaced from outlet 140 of the nozzle pipe. The deflector 120 is mounted at the end of the stem 130 arranged coaxially in the nozzle pipe 110.

Referring now to Figures 2 and 5, the stem 130 is made movable. It can be raised from its illustrated position to lift the deflector 120 away from the nozzle outlet 110. When so lifted, any solid matter occluding the nozzle assembly 100 is swept away by flowing washing fluid fed via duct 306. The stem and deflector can then be lowered again to their normal operating position as illustrated.

To this end, the stem 130 is connected to the piston 340 of a double-acting piston/cylinder actuator 342. The stem passes through a bearing seal 344 interposed between the inlet fitting and the actuator 342. The actuator is affixed to the inlet fitting by means not shown. The double-acting actuator 342 is of a known type, readily available commercially, and hence will not be described in detail. Suffice to say, it has two control ports 346,348. By means of the ports, opposite sides of the piston 340 can be respectively pressurised and depressurised (or vented) for positively moving it upwardly or downwardly, and with it the stem and deflector. The lowermost position of the stem 330 can be defined in various ways, e.g. by a fixed collar 350 thereon abutting the bearing seal 344. Alternatively, this position can be set by abutment between the lower end of the piston 340 and the corresponding end of the cylinder.

The control ports 346,348 are connected to a changeover valve V, which is further connected to pressurising line 352 and to depressurising or venting line 354. Line 352 can be coupled to any source of pressurised fluid, e.g. high pressure air. Line 354 can then vent to atmosphere. Most conveniently, however, and as shown, line 352 is tapped into the washing fluid feed duct 306. The line 354 will then be connected to drain or to the recirculation tank, not shown.

In use, valve V, will connect port 348 to the pressurised line 352 and the port 346 to the depressurising or venting line 354 for raising the piston, stem 330 and deflector 320, and will connect port 348 to line 354 and port 346 to pressurised line 352 for lowering them.

The valve V can be manually-operated, electrically or motor driven, and if the latter it can be controlled according to some specified automatic regime. For instance, the valve could be operated to raise and lower the deflector briefly at regular, preset time intervals to keep the static sprayer free from blockages.

## Claims

1. A gas scrubber comprising a gas duct (6) and a static sprayer (8) therein arranged to spray recirculated washing fluid across the duct, the sprayer comprising a nozzle (100) having an outlet (110) for the washing liquid at which is provided a deflector (120), the deflector (120) being arranged to be moveable relative to the outlet (140) during use of the gas scrubber for cleaning the sprayer of solid occlusions.

2. A gas scrubber according to claim 1 wherein the sheet of washing fluid produced by the static sprayer in use is substantially planar.

3. A gas scrubber according to either one of claims 1 and 2 wherein the deflector (120) is conical, frusto-conical, cusped or trumpet-shaped.

4. A gas scrubber according to claim 3 wherein the outer perimeter of the deflector (120) has an annular groove (200) bounded by a lip (210) immediately adjacent the outer periphery thereof.

5. A gas scrubber according to any one of claims 1 to 4 wherein the deflector (120) is mounted on a stem (130), the longitudinal axis of the stem being co-axial with that of the outlet (110).

6. A gas scrubber according to any one of the preceding claims comprising a plurality of static sprayers (8).

7. A gas scrubber according to claim 6, wherein the static sprayers (8) are arranged in one plane or adjacent a common plane.

8. A gas scrubber according to any one of the preceding claims wherein the washing fluid is fed to the nozzle and recirculated via a tank (14).

9. A static sprayer comprising a nozzle (100) having an outlet (110) and a deflector (120), and adjustment means (342) for adjusting the distance between the outlet (110) and the deflector (120) coupleable to the recirculating washing fluid and powerable hydraulically thereby.

10. A sprayer as claimed in claim 9 in which the adjustment means comprises a double-acting piston/cylinder actuator (342).

11. A sprayer as claimed in claim 10 in which the adjustment means (342) includes control ports (346, 348) connected to a changeover valve (V) which is further connected to a pressuring line (352) and to a depressurising line (354).

12. A sprayer as claimed in claim 11 in which the valve (V) is motor driven.

13. A method of scrubbing gas with a gas scrubber according to any one of claims 1 to 8 comprising intermittently moving the deflector (120) relative to the outlet (110) during use of the gas scrubber to clear the sprayer of any accumulated solid occlusions.

14. A method according to claim 13 in which the intermittent movement of the deflector (120) relative to the outlet (110) is controlled according to some specified, automatic regime.

15. A method according to claim 14 in which the regime comprises moving the deflector (120) from and back to its operating position briefly at regular, preset intervals of time.
